# EUROPÄISCHE PATENTSCHRIFT

(11) **EP 2 593 310 B1**
(45) Veröffentlichungstag und Bekanntmachung des Hinweises auf die Patenterteilung: **10.06.2015**
(21) Anmeldenummer: 11735791.3
(22) Anmeldetag: 06.07.2011
(51) Int. Cl.: B42D 15/00, G07D 7/00, B42D 25/00, B42D 25/29, G03H 1/00, G03H 1/18, G07D 7/12, G03H 1/26, G03H 1/02

(54) **SICHERHEITSELEMENT MIT HOLOGRAMMSTRUKTUREN**
SECURITY ELEMENT WITH HOLOGRAM STRUCTURES
ÉLÉMENT DE SÉCURITÉ ET STRUCTURES D'HOLOGRAMMES

(30) Priorität: 12.07.2010 DE 102010026952
(43) Veröffentlichungstag der Anmeldung: 22.05.2013
(73) Patentinhaber: Giesecke & Devrient GmbH, 81677 München (DE); Hologram Industries (S.A.), 77607 Marne-La-Vallée Cédex 3 (FR)
(72) Erfinder: KELLER, Mario, 83358 Seebruck (DE); DAUSMANN, Günther, 85630 Grassbrunn (DE); MENZ, Irina, 85630 Grasbrunn (DE)
(74) Vertreter: Zeuner Summerer Stütz
(86) Internationale Anmeldenummer: PCT/EP2011/003345
(87) Internationale Veröffentlichungsnummer: WO 2012/007120

(56) Entgegenhaltungen:
- WO-A1-03/099581
- WO-A1-2007/042176
- DE-A1-102004 053 367
- DE-A1-102008 017 652

## Beschreibung

Die Erfindung betrifft ein Sicherheitselement für Sicherheitspapiere, Wertdokumente und andere Datenträger, das eine Oberflächenhologrammstruktur und eine Volumenhologrammstruktur enthält. Die Erfindung betrifft ferner ein Verfahren zur Herstellung eines derartigen Sicherheitselements und einen Datenträger mit einem solchen Sicherheitselement.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Dabei werden bei Massenprodukten oft Oberflächenhologrammstrukturen eingesetzt, die mittels Prägetechnik vergleichsweise einfach erzeugt werden können. Dazu wird beispielsweise mit einem Masterhologramm ein Prägestempel erzeugt, mit dem die gewünschte Hologrammstruktur in eine Prägelackschicht eines Zielsubstrats eingeprägt wird. Mit Oberflächenhologrammstrukturen lassen sich attraktive holographische Effekte mit gutem optischen Eindruck erzeugen.

Volumenhologramme beruhen dagegen auf der Lichtbeugung an einem holographischen Gitter aus beabstandeten Bragg-Ebenen, die im Volumen einer transparenten Aufzeichnungsschicht vorliegen. Da die Herstellung von Volumenhologrammstrukturen technisch wesentlich komplexer und aufwendiger ist als die Herstellung von Oberflächenhologrammstrukturen, verleihen sie einem Sicherheitselement eine höhere Fälschungssicherheit als Oberflächenhologrammstrukturen. Die erhöhte Fälschungssicherheit der Volumenhologrammstrukturen liegt auch daran, dass die für die Belichtung der Volumenhologramme eingesetzten Wellenlängen in der Regel nicht den Wellenlängen der handelsüblichen Laser entsprechen.

In der Druckschrift EP 1511636 B1 ist vorgeschlagen worden, ein Oberflächenhologramm und ein Volumenhologramm in einem Sicherheitselement zu kombinieren, wobei in dem Volumenhologramm volumenholographisch zumindest ein Teil der Information des Oberflächenhologramms gespeichert ist.

Ausgehend davon liegt der Erfindung die Aufgabe zugrunde, ein Sicherheitselement der eingangs genannten Art bezüglich Fälschungsschutz und Erkennbarkeit durch einen Betrachter weiter zu verbessern.

Diese Aufgabe wird durch das Sicherheitselement und das Herstellungsverfahren mit den Merkmalen der unabhängigen Ansprüche gelöst. Weiterbildungen der Erfindung sind Gegenstand der Unteransprüche.

Gemäß der Erfindung ist bei einem gattungsgemäßen Sicherheitselement vorgesehen, dass die Volumenhologrammstruktur in Teilbereichen aufgequollen ist. Dadurch wird zum einen eine Zusatzinformation in Form eines zwei- oder mehrfarbigen Motivs gebildet. Das durch die Quell technik gebildete Motiv kann die Bildinformation des Oberflächenhologramms teilweise oder ganz enthalten, oder aber ein von dem Oberflächenhologramm verschiedenes Motiv aufweisen. Denkbar ist selbstverständlich auch, dass sich das Motiv des Volumenhologramms mit der Bildinformation des Oberflächenhologramms zu einem in einem Sinnzusammenhang stehenden Symbol ergänzt. Dies wäre beispielsweise der Fall, wenn das durch die Quelltechnik im Volumenhologramm gebildete Motiv eine Sonne ist, die von den im Oberflächenhologramm enthaltenen Sonnenstrahlen umgeben ist. Das Aufquellen der Volumenhologrammstruktur erfolgt dabei in der Regel einem Design folgend in definierter Weise durch eine Wellenlänge, insbesondere eines Lasers, die im kommerziellen Bereich üblicherweise nicht eingesetzt wird, was die Fälschungssicherheit der erfindungsgemäßen Strukturen gegenüber z.B. Oberflächenhologrammstrukturen deutlich erhöht.

In den erfindungsgemäß aufgequollenen Teilbereichen der Volumenhologrammstruktur wird zum Zweiten eine Zusatzinformation in Form einer Mikrostruktur erzeugt. Unter einer Mikrostruktur werden im Rahmen der vorliegenden Erfindung sämtliche Strukturen verstanden, die durch den Einsatz der Quelltechnik in den Teilbereichen der Volumenhologrammstruktur erzeugt werden und eine dreidimensionale Zusatzinformation in der Volumenhologrammstruktur darstellen. Bei der Mikrostruktur wird es sich aufgrund der eingesetzten Quelltechnik in der Regel um ein Relief handeln, das im Bereich der Teilbereiche der Volumenhologrammstruktur angeordnet ist. Das Relief kann dabei beliebig geformt sein, wobei je nach eingesetzten Materialien und eingesetzter Quelltechnik (siehe dazu weiter unten in der Beschreibung) bestimmte Typen von Mikrostrukturen typischerweise in den Teilbereichen der Volumenhologrammstruktur angeordnet sein werden. Die erfindungsgemäße Mikrostruktur kann sowohl diffraktiv als auch nicht diffraktiv ausgebildet sein. Des Weiteren kommen sämtliche Mikrostrukturen, insbesondere in Form von Linsen, Spiegeln etc. in Betracht, mit denen sich optische Effekte, wie z.B. Vergrößerung, Verkleinerung, Verzerrung etc. erzielen lassen.

Wie weiter unten noch näher beschrieben wird, sind Mikrostrukturen in Form einer Binärstruktur sowie linsenartige Mikrostrukturen besonders bevorzugt. Während linsenartige Strukturen einen kontinuierlichen Oberflächenverlauf zeigen, sind Binärstrukturen diskontinuierliche Strukturen. Selbstverständlich kann die Mikrostruktur auch als eine quasikontinuierliche Struktur, z.B. in Form einer durch eine Vielzahl an Stufen angenäherte Linse, ausgebildet sein. Als weitere Beispiele für die erfindungsgemäße Mikrostruktur können ferner symmetrische und asymmetrische Sägezahnstrukturen, Fresnel-Linsenstrukturen sowie konkave, konvexe Linsenstrukturen sowie beliebige Mischformen aus den vorstehend genannten beispielhaften Mikrostrukturen eingesetzt werden.

Durch die Zusatzinformation in Form einer Mikrostruktur wird der Fälschungsschutz weiter erhöht, da diese dreidimensionalen Strukturen mit einfachen Mitteln, z.B. einem Farbkopierer, nicht zu reproduzieren sind. Das erfindungsgemäße Sicherheitselement weist demnach einen erheblichen Schutz gegen Fälschung auf, der sich durch das synergistische Zusammenwirken der Zusatzinformation in Form eines zwei- oder mehrfarbigen Motivs und der Zusatzinformation in Form der Mikrostruktur ergibt.

Darüber hinaus kann die Mikrostruktur auch eine Zusatzfunktion erfüllen, z.B. dadurch, dass sie als Vergrößerungseinrichtung für das darunterliegende Motiv oder als Linsenraster einer Moiré-Magnifier-Anordnung fungiert. Auch können durch die erfindungsgemäße Mikrostruktur Dünnschichtanordnungen erzeugt werden, die abhängig vom Betrachtungswinkel für den Betrachter ein unterschiedliches visuelles Erscheinungsbild erzeugen. Solche Dünnschichtstrukturen mit Farbkippeffekt lassen sich erfindungsgemäß mit einer verhältnismäßig großen Genauigkeit erzeugen, die der Genauigkeit des erfindungsgemäß ebenfalls als Zusatzinformation erzeugten ein- oder mehrfarbigen Motivs entspricht. Demzufolge kann sowohl das Motiv als auch die Mikrostruktur eine Zusatzinformation in Form eines Halbtonbildes bilden.

In einer vorteilhaften Erfindungsvariante liegt die Oberflächenhologrammstruktur in einer Prägelackschicht vor, die zusammen mit einer Metallschicht eine Reflexionshologrammstruktur bildet. Dabei ist die Metallschicht der Reflexionshologrammstruktur in bevorzugten Ausgestaltungen mit Aussparungen in Form von Mustern, Zeichen oder einer Codierung versehen.

In einer anderen ebenfalls vorteilhaften Erfindungsvariante liegt die Oberflächenhologrammstruktur in einer Prägelackschicht vor, die zusammen mit einer transparenten Deckschicht mit unterschiedlichem Brechungsindex ein Transmissionshologramm bildet. Der Brechungsindex der transparenten Deckschicht unterscheidet sich dabei mit Vorteil um 0,3 oder mehr von dem Brechungsindex der Prägelackschicht.

Nach einer vorteilhaften Weiterbildung der Erfindung bildet die Prägelackschicht der Oberflächenhologrammstruktur zugleich ein Quellmittel für das bereichsweise Aufquellen der Volumenhologrammstruktur. Ein derartiges Sicherheitselement kann unter Beibehaltung der erfindungsgemäßen Vorteile einfacher, schneller und kostengünstiger hergestellt werden.

Die Oberflächenhologrammstruktur und die Volumenhologrammstruktur können mit Vorteil nichtüberlappend nebeneinander angeordnet sein. Bevorzugt sind gegenwärtige allerdings Gestaltungen, bei denen die Oberflächenhologrammstruktur und die Volumenhologrammstruktur übereinander bzw. einander zumindest bereichsweise überlappend angeordnet sind.

Die Erfindung enthält auch ein Verfahren zur Herstellung eines Sicherheitselements für Sicherheitspapiere, Wertdokumente und andere Datenträger, bei dem
- zur Erzeugung einer Volumenhologrammstruktur eine Photopolymerschicht belichtet und fixiert wird,
- ein Quellmittel auf die Volumenhologrammstruktur aufgebracht wird, das zur Erzeugung einer oder mehrerer gewünschter Farben für eine definierte Einwirkzeit auf die Photopolymerschicht einwirken gelassen wird, wodurch in der Volumenhologrammstruktur eine Zusatzinformation in Form eines zwei- oder mehrfarbigen Motivs und in Form einer Mikrostruktur gebildet wird, und
- die Volumenhologrammstruktur mit einer Oberflächenhologrammstruktur kombiniert wird.

Um Motive mit besonders hoher Leuchtkraft zu erzeugen, wird die Volumenhologrammstruktur vor dem Erzeugen der Zusatzinformation mit Vorteil definiert belichtet. Die Belichtung kann verschieden ausgestaltet sein, z.B. als gerichtete oder als diffuse Belichtung, beispielsweise über eine Mattscheibe.

Als Quellmittel kommen insbesondere organische Lösemittel und monomerhaltige Mittel infrage. Mit Vorteil wird das Quellmittel durch Druckverfahren, insbesondere durch ein Tintenstrahldruckverfahren, bereichsweise auf die Photopolymerschicht aufgebracht.

Das Quellmittel wird vorzugsweise nach Ablauf der definierten Einwirkzeit entfernt, beispielsweise abgewischt. Mit Vorteil können auch UV-härtbare Quellmittel verwendet werden, bei denen die definierte Einwirkzeit durch Bestrahlen des Quellmittels mit UV-Strahlung beendet werden kann. In diesem Fall kann das Quellmittel auch vollflächig aufgebracht und selektiv mit UV-Strahlung in Gestalt des zu erzeugenden Motivs belichtet werden.

Zur Erzeugung der Oberflächenhologrammstruktur wird vorteilhaft eine Prägelackschicht auf die Volumenhologrammstruktur aufgebracht und eine gewünschte Beugungsstruktur in die Prägelackschicht eingeprägt. In einer besonders vorteilhaften Ausgestaltung bildet das Quellmittel zugleich die Prägelackschicht, in die die gewünschte Beugungsstruktur eingeprägt wird. Dazu wird als Quellmittel insbesondere ein UV-härtbares Quellmittel eingesetzt. Nach dem Aufquellen der Photopolymerschicht in den gewünschten Bereichen wird das Quellmittel gehärtet und dient dann als Prägelackschicht für die Einprägung der Beugungsstruktur des Oberflächenhologramms.

Die Erfindung umfasst auch einen Datenträger, insbesondere ein Sicherheitspapier oder Wertdokument mit einem Sicherheitselement der beschriebenen Art.

Durch das für die Herstellung des beschriebenen Kombinationshologramms erforderliche aufwendige Herstellungsverfahren ist der Fälschungsschutz erfindungsgemäßer Sicherheitselemente gegenüber herkömmlichen Sicherheitselementen deutlich erhöht. Auch lassen sich insbesondere durch die Kombination einer zunächst definiert belichteten Photopolymerschicht mit einem Volumenhologramm und einem oder mehreren nachfolgenden Quellschritten mehrfarbige Motive erzeugen, die aus einem verhältnismäßig großen Betrachtungswinkelbereich (sogenannter "Rekombinationswinkelbereich") mit verhältnismäßig großer Leuchtstärke wahrgenommen werden können. Die Motive sind dabei insbesondere durch die Parameter Farbe, Rekombinationswellenlänge und Betrachtungswinkel charakterisiert.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:
- Fig. 1: eine schematische Darstellung einer Banknote mit einem erfindungsgemäßen Sicherheitselement,
- Fig. 2: schematisch den Schichtaufbaus eines erfindungsgemäßen Sicherheitselements im Querschnitt,
- Fig. 3: in (a) bis (d) Zwischenschritte bei der Herstellung des Sicherheitselements der Fig. 2,
- Fig. 4: ein Sicherheitselement nach einem weiteren Ausführungsbeispiel der Erfindung, und
- Fig. 5: in (a) bis (d) stark schematisch verschiedene Varianten für die Anordnung einer Oberflächenhologrammstruktur und einer Volumenhologrammstruktur auf einem Träger.

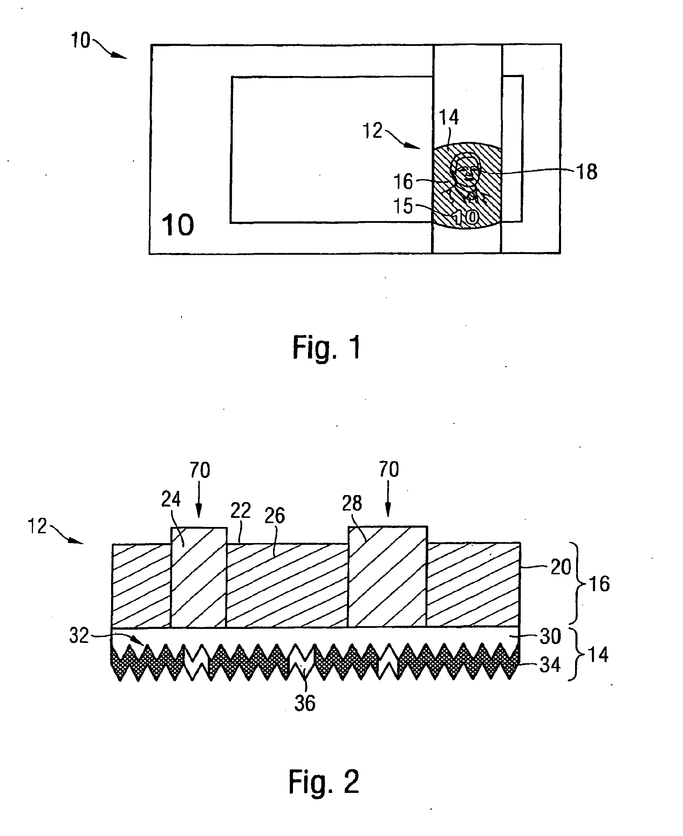

Die Erfindung wird nun am Beispiel einer Banknote erläutert. Fig. 1 zeigt dazu eine schematische Darstellung einer Banknote 10, die in einem Transferstreifen mit einem erfindungsgemäßen Sicherheitselement 12 versehen ist.

Das Sicherheitselement 12 enthält ein Kombinationshologramm aus einer Oberflächenhologrammstruktur 14 und einer Volumenhologrammstruktur 16, wobei die Volumenhologrammstruktur 16 in Teilbereichen aufgequollen ist und dadurch eine Zusatzinformation in Form eines mehrfarbigen Portraits 18 und einer in Fig. 1 nicht weiter dargestellten Zusatzinformation in Form der Mikrostruktur 70 enthält. Die Oberflächenhologrammstruktur 14 ist als metallisches Reflexionshologramm ausgebildet und enthält neben der eigentlichen Hologramminformation demetallisierte Aussparungen 15, die mit ihrer Form die Denomination "10" der Banknote 10 bilden.

Fig. 2 zeigt schematisch den Schichtaufbaus eines erfindungsgemäßen Sicherheitselements 12 im Querschnitt. Von dem Schichtaufbau sind dabei nur die für die Erfindung wesentlichen Schichten dargestellt, insbesondere wurde das Substrat, auf dem die Schichten aufgebaut sind, der einfacheren Darstellung halber in der Figur weggelassen.

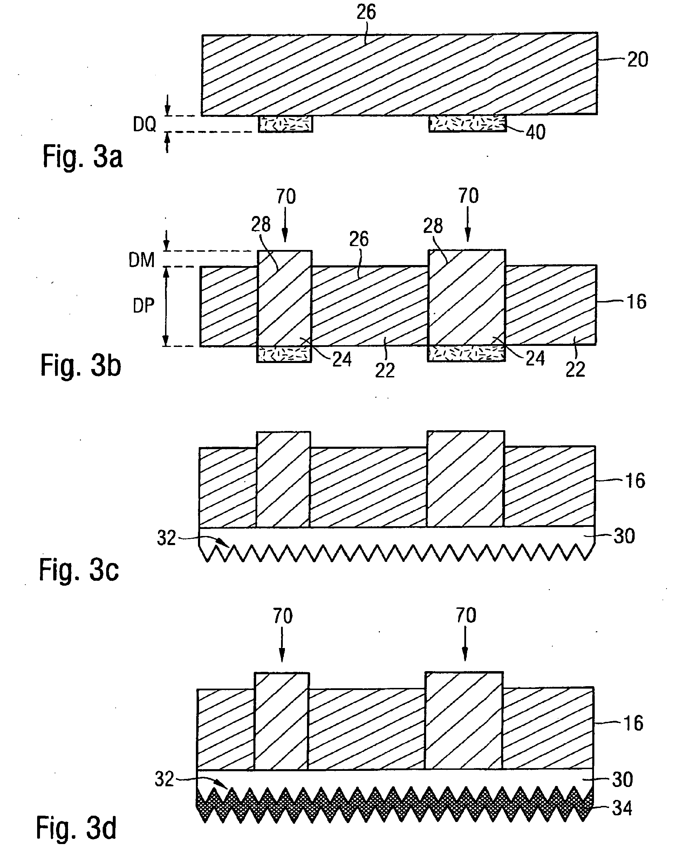

Das Sicherheitselement 12 weist zunächst eine Photopolymerschicht 20 auf, die die Volumenhologrammstruktur 16 und die Zusatzinformationen 18 und 70 enthält. Wie durch die unterschiedliche Schraffur der Bereiche 22, 24 der Volumenhologrammstruktur 16 angedeutet, weisen dort die Bragg-Ebenen 26 bzw. 28 des Volumenhologramms jeweils einen unterschiedlichen Abstand voneinander und einen unterschiedlichen Winkel zur Schichtoberfläche auf. Sie erscheinen daher für den Betrachter im Weißlicht mit unterschiedlicher Farbe (unterschiedlicher Abstand der Bragg-Ebenen 26, 28). Des Weiteren rekonstruiert das Volumenhologramm in den Bereichen 22,24 für den Betrachter unter unterschiedlichen Winkeln (unterschiedliche Winkel der Bragg-Ebenen 26, 28 zur Schichtebene). Der bereichsweise unterschiedliche Abstand der Bragg-Ebenen 26 und 28 und der unterschiedliche Winkel zur Schichtebene wird durch eine lokale Quellung der Photopolymerschicht 20 erzeugt, wie in Zusammenhang mit Fig. 3 genauer beschrieben. Die Formen und Farben der Bereiche 22,24 bilden im Ausführungsbeispiel das Portrait 18 der Fig. 1. Des Weiteren wird durch die Form der Bereiche 22, 24 die Form der Mikrostruktur 70 parallel zur Ebene der Photopolymerschicht festgelegt.

Weiter ist auf der Photopolymerschicht 20 eine Prägelackschicht 30 mit einer Beugungsstruktur 32 aufgebracht. Die Prägelackschicht 30 ist mit einer Metallisierung 34 versehen und bildet zusammen mit dieser ein reflektierendes Oberflächenhologramm 14. Durch bereichsweise Demetallisierung sind darüber hinaus Aussparungen 36 in der Metallschicht 34 erzeugt, deren Form die Denomination "10" der Banknote bildet.

Die Herstellung des Sicherheitselements 12 der Fig. 2 wird nun mit Bezug auf die Figuren 3(a) bis (d) erläutert. Mit Bezug zunächst auf Fig. 3(a) wird zur Erzeugung der Volumenhologrammstruktur 16 eine Photopolymerschicht 20 bereitgestellt, beispielsweise auf eine transparente Kunststofffolie aufgedruckt, in an sich zur Hologrammherstellung bekannter Weise belichtet und fixiert. Wie durch die gleichmäßige Beabstandung der Bragg-Ebenen 26 angedeutet, erscheint die so erzeugte Volumenhologrammstruktur 16 bei Betrachtung zunächst einfarbig. Es sei an dieser Stelle erwähnt, dass die Reihenfolge von Belichtung und Fixierung sowie Quellung des Photopolymers grundsätzlich auch vertauscht werden kann, d.h. eine Volumenhologrammstruktur mit gequollenen Teilbereichen kann grundsätzlich auch durch eine zuerst durchgeführte Quellung und eine anschließende Belichtung und Fixierung des Volumenhologramms erfolgen. Im Rahmen der vorliegenden Erfindung wird aus Gründen der Übersichtlichkeit lediglich die Herstellung einer Volumenhologrammstruktur mit der Reihenfolge der Schritte: Belichtung des Photopolymers, Fixierung und nachfolgende Quellung des Photopolymers beschrieben. Mit dem Fachmann bekannten Maßnahmen lässt sich die nachfolgend beschriebene Erfindung allerdings auch in der umgekehrten Reihenfolge: Quellung, Belichtung und Fixierung durchführen. Die Form des in den Teilbereichen 24 aufgebrachten Quellmittels 40 legt sowohl die Form der aufgequollenen Teilbereiche 24 als auch die Form der Mikrostruktur 70 parallel zur Photopolymerschicht fest. In Fig. 3(a) und (b) ist die in den Teilbereichen 24 aufgebrachte Dicke (DQ) des Quellmittels 14 in den dargestellten Teilbereichen gleich. Selbstverständlich kann die Dicke DQ des Quellmittels in den einzelnen Teilbereichen 24 unterschiedlich groß sein, oder aber einen gestuften oder kontinuierlichen Verlauf z.B. in Form einer Stufenanordnung oder einer linsenförmigen Anordnung aufweisen. Diese nicht weiter dargestellten Quellmittelaufträge mit variierender Schichtdicke führen zu einer unterschiedlich starken Quellung des Photopolymers 20. Selbstverständlich kann eine unterschiedlich starke Quellung in den einzelnen Teilbereichen 24 auch durch Aufbringung unterschiedlicher Quellmittel in den einzelnen Teilbereichen herbeigeführt werden.

Dann wird auf die Volumenhologrammstruktur 16 z.B. mit einem Tintenstrahldruckverfahren in Teilbereichen 24 ein Quellmittel 40 in Form des gewünschten Portraits 18 aufgedruckt. Als Quellmittel kommen beispielsweise organische Lösemittel oder monomerhaltige Mittel infrage.

Durch die Einwirkung des Quellmittels 40 quillt die Photopolymerschicht 20 in den Bereichen 24 lokal auf und verändert damit dort den Winkel und den Abstand der Bragg-Ebenen der Photopolymerschicht 20. Dieser Effekt ist in den Figuren 2 und 3(b) schematisch durch die steileren und mit größerem Abstand angeordneten Bragg-Ebenen 28 angedeutet. Durch die Einwirkung des Quellmittels 40 wird darüber hinaus in den Teilbereichen 24 auch die Dicke der Photopolymerschicht (DP) vergrößert. D.h., in den Teilbereichen 24 ist die Schichtdicke des Photopolymers um die Dicke der Mikrostruktur DM gegenüber der ursprünglichen, nicht gequollenen Dicke des Photopolymers DP vergrößert. Wie in Fig. 3(b) dargestellt, führt eine in einem Teilbereich 24 konstante Schichtdicke des Quellmittels auch zu einer konstanten Dicke DM der Mikrostruktur 70. Wird hingegen in einem Teilbereich 24 ein Quellmittelauftrag mit kontinuierlichem Dickenverlauf, z.B. in Form einer Linse, angeordnet, ergibt sich für die betreffende Mikrostruktur in diesem Teilbereich ein entsprechender Verlauf der Dicke DM, d.h. die entsprechende Mikrostruktur 70 weist ebenfalls die Form einer Linse auf. Wie bereits erwähnt, sind in Fig. 2 und Fig. 3 der Übersichtlichkeit halber nur einfache Mikrostrukturen 70 in Form von Binärstrukturen dargestellt. Generell lässt sich sagen, dass die Größe der Mikrostrukturen 70 parallel zur Ebene des Photopolymers 20 typischerweise 1 µm bis 100 µm beträgt, wobei kleinere und größere Abmessungen generell möglich sind.

Nach einer gewünschten Einwirkzeit wird das Quellmittel 40 entfernt, beispielsweise von der Photopolymerschicht 20 abgewischt. Es können auch UV-härtbare Quellmittel 40 verwendet werden, bei denen die Einwirkzeit durch Bestrahlen mit UV-Strahlung beendet werden kann. In diesem Fall kann das Quellmittel auch vollflächig aufgebracht und in Form des gewünschten Motivs mit UV-Licht bestrahlt werden, beispielsweise mittels eines UV-Beamers. In letzterem Fall lässt sich durch zusätzliche Verwendung einer Maske, welche in einem zur Belichtung vorgesehenen Teilbereich eine unterschiedliche Durchlässigkeit für das UV-Licht aufweist, eine Quellmittelschicht 40 mit entsprechender variierender Dicke erzeugen, wodurch die oben beschriebenen Mikrostrukturen mit nicht konstanter Dicke DM erhalten werden können. Mit Bezug auf Fig. 3 ist noch generell anzumerken, dass die Aufbringung des Quellmittels 40 und die Bildung der Mikrostruktur 70 auf den beiden gegenüberliegenden Flächen der Photopolymerschicht aus Gründen der einfachen Darstellung gewählt wurden. Selbstverständlich wird das Vorhandensein eines in dieser Figur nicht dargestellten Trägersubstrats die Quellung des Photopolymers auf dieser Trägerschichtseite beeinflussen, d.h. in der Regel wird die Quellung des Photopolymers auf der das Trägersubstrat aufweisenden Seite geringer sein als ohne Trägersubstrat. Bei geeigneter Anordnung von Trägersubstrat, Photopolymerschicht 20 und Quellmittel 40 lässt sich aber in jedem Fall ein Sicherheitselement gemäß der vorliegenden Erfindung herstellen. Gegebenenfalls muss das Photopolymer 20 mit der in den Teilbereichen angeordneten Mikrostruktur 70 so positioniert werden, dass diese Mikrostruktur dem Betrachter beim fertigen Sicherheitselement zugewandt ist.

Durch den größeren Abstand der Bragg-Ebenen ergibt sich in den Bereichen 24 bei der Betrachtung eine Farbverschiebung zu größeren Wellenlängen. Für den Betrachter entstehen auf diese Weise im Volumenhologramm 16 Bereiche mit unterschiedlichen Farben. In den Figuren sind zur Illustration nur zwei Abstände der Bragg-Ebenen und damit nur zwei Farben gezeigt, im Allgemeinen können jedoch durch unterschiedlich lange Einwirkzeiten mehrere unterschiedliche Farben und damit etwa ein mehrfarbiges Portraitmotiv 18 erzeugt werden.

Um mehr als zwei Farben zu erzeugen, kann das Quellmittel beispielsweise in verschiedenen Bereichen zu unterschiedlichen Zeitpunkten aufgebracht und später gleichzeitig von allen Bereichen entfernt werden. Alternativ kann das Quellmittel auch nacheinander mehrfach in verschiedenen Teilmotivformen aufgebracht, für eine unterschiedlich lange Einwirkzeit auf der Photopolymerschicht 20 belassen und dann entfernt werden. Da die Quellung der Photopolymerschicht zu größeren Abständen der Bragg-Ebenen und damit zu längerwelligen Farben führt, erfolgt die anfängliche Belichtung des Volumenhologramms vorteilhaft mit kurzwelligem, insbesondere blauem Licht. Auf diese Weise können durch die Quelltechnik mehrfarbige Motive in Volumenhologrammen erzeugt werden, die den gesamten sichtbaren Spektralbereich abdecken.

Für die Erzeugung von zwei- oder mehrfarbigen Motiven besonders hoher Leuchtkraft hat es sich bewährt, wenn die Photopolymerschicht 20 vor dem Aufbringen des Quellmittels im Bereich des einzubringenden Motivs einem diffusen Belichtungsschritt unterzogen wird. Die Photopolymerschicht 20 wird dazu beispielsweise über eine Mattscheibe in dem gewünschten Bereich diffus belichtet. Verglichen mit einer Verfahrensführung ohne einen solchen diffusen Belichtungsschritt ergeben sich besonders leuchtkräftige, in Quelltechnik eingebrachte, mehrfarbige Motive.

Mit Bezug auf Fig. 3(c) wird nach dem Entfernen des Quellmittels 40 eine Prägelackschicht 30 auf die Photopolymerschicht 20 aufgebracht und in Form der gewünschten Beugungsstruktur 32 geprägt. Anschließend wird die Beugungsstruktur 32 mit einer Metallisierung 34 versehen, wie in Fig. 3(d) gezeigt. Schließlich werden durch bereichsweise Demetallisierung die gewünschten Aussparungen 36 erzeugt, so dass das in Fig. 2 dargestellte Sicherheitselement 12 entsteht.

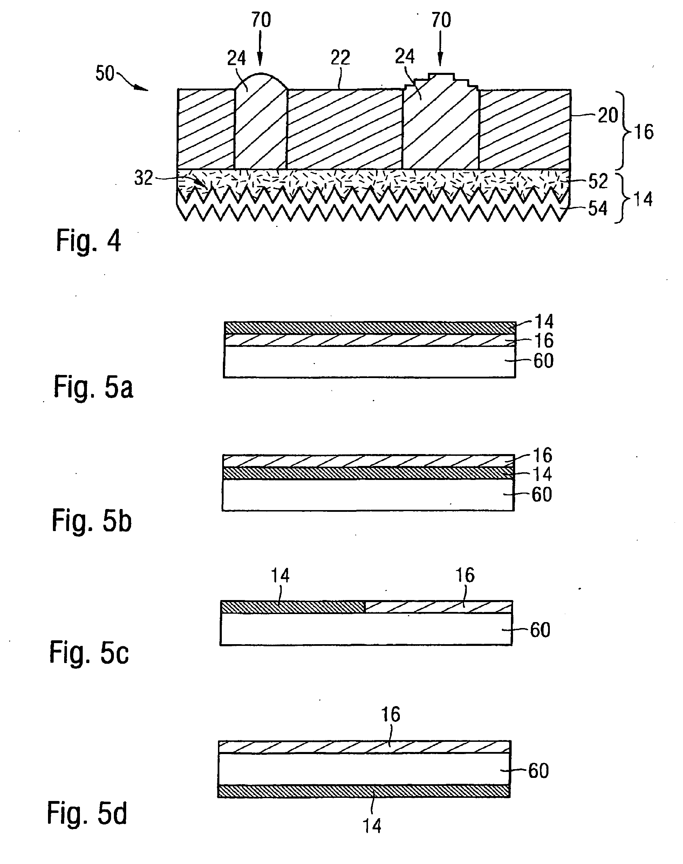

Fig. 4 zeigt ein Sicherheitselement 50 nach einem weiteren Ausführungsbeispiel der Erfindung. Das Sicherheitselement 50 weist eine Photopolymerschicht 20 auf, die, wie grundsätzlich bereits bei Fig. 2 beschrieben, eine Volumenhologrammstruktur 16 und Zusatzinformationen 18 und 70 enthält. Im Unterschied zu dem Ausführungsbeispiel der Fig. 2 ist auf die Volumenhologrammstruktur 16 der Fig. 4 vollflächig ein UV-härtendes Quellmittel 52 aufgebracht, das nach der Quellung der Photopolymerschicht 20 die Prägelackschicht für die Oberflächenhologrammstruktur 14 bildet.

Um die gewünschte bereichsweise Quellung der Photopolymerschicht 20 zu erreichen, wird die vollflächig aufgebrachte Quellmittelschicht 52 unmittelbar nach dem Aufbringen beispielsweise über eine Projektionsoptik in den Bereichen 22 mit UV-Strahlung beaufschlagt. Das Quellmittel 52 wird dadurch in diesen Bereichen gehärtet, so dass dort keine Quellung der Photopolymerschicht 20 erfolgt. In den nicht belichteten Bereichen 24 ist das Quellmittel 52 nicht gehärtet und bewirkt dort in der oben beschriebenen Weise eine Quellung der Photopolymerschicht 20. Nach Ablauf der gewünschten Einwirkzeit wird die Quellmittelschicht 52 entweder vollflächig mit UV-Strahlung beaufschlagt und die Quellung dadurch auch in den Bereichen 24 gestoppt. Alternativ werden die Teilbereiche 24 z.B. unter Zuhilfenahme einer Maske mit einem vorgegebenen Transmissionsprofil für die eingesetzte UV-Strahlung belichtet. Dadurch kann für jeden Teilbereich 24 die Dicke und damit die Aktivität des Quellmittels gemäß dem in der Maske vorgegebenen Intensitätsprofil gesteuert werden. Wie bereits erwähnt ist es grundsätzlich möglich, über das Dickenprofil des in einem Teilbereich 24 vorgesehenen Quellmittels 40 eine korrespondierende Oberflächenstruktur, d.h. das Relief der Mikrostruktur 70 in dem jeweiligen Teilbereich festzulegen. Zur Illustration ist in Fig. 4 eine Mikrostruktur 70 in Form einer Linse und eine zweite Mikrostruktur 70 in Form einer gestuften Binärstruktur dargestellt. Es versteht sich, dass in jeder der vorstehend beschriebenen Varianten zur Belichtung und Steuerung der Quellmittelaktivität in einem abschließenden Schritt die Quellung durch eine gegebenenfalls weitere UV-Bestrahlung beendet werden muss.

Die nunmehr vollständig ausgehärtete Quellmittelschicht 52 dient nun als Prägelackschicht, in die eine gewünschte Beugungsstruktur 32 eingeprägt wird. Die Beugungsstruktur 32 kann weiter, wie in Fig. 2 gezeigt, mit einer Metallisierung 34 und gegebenenfalls mit Aussparungen 36 in der Metallisierung 34 versehen werden.

Um ein Durchsichtssicherheitselement zu schaffen, kann die Beugungsstruktur 32 jedoch auch mit einer transparenten Deckschicht 54 versehen werden, wie in Fig. 4 dargestellt. Die transparente Deckschicht 54 weist vorzugsweise einen Brechungsindex auf, der um mehr als 0,3 von dem Brechungsindex der Quellmittelschicht 52 abweicht, so dass durch den Brechungsindexsprung an der Grenzfläche der beiden Schichten 52, 54 das Motiv des Hologramms sichtbar wird. Bei der Ausgestaltung der Fig. 4 bildet die geprägte Quellmittelschicht 52 zusammen mit der transparenten Deckschicht 54 somit ein Oberflächen-Transmissionshologramm 14.

Fig. 5 zeigt in (a) bis (d) stark schematisch verschiedene Varianten für die Anordnung einer Oberflächenhologrammstruktur 14 und einer Volumenhologrammstruktur 16 auf einem Träger 60. Es versteht sich, dass der Träger 60 je nach den Anforderung bei der Herstellung, beispielsweise im Fall eines Belichtungsschritts, transparent oder transluzent ausgestaltet sein kann.

Fig. 5(a) zeigt einen Träger 60, beispielsweise eine Kunststofffolie, auf dessen Oberfläche zunächst eine Volumenhologrammstruktur 16 und auf dieser eine Oberflächenhologrammstruktur 14 angeordnet ist. Der Träger 60 kann dauerhaft im Sicherheitselement verbleiben, oder kann nach dem Übertragen der beiden Hologrammstrukturen auf ein Zielsubstrat auch abgezogen werden, beispielsweise über eine zu diesem Zweck vorgesehene Trennschicht.

Auch die umgekehrte Reihenfolge von Volumenhologrammstruktur 16 und Oberflächenhologrammstruktur 14 auf dem Träger 60 ist möglich, wie in Fig. 5(b) gezeigt. Anstatt vollständig übereinander zu liegen, können die Volumenhologrammstruktur 16 und Oberflächenhologrammstruktur 14 auch nur teilweise überlappen, oder auch nicht überlappend nebeneinander liegen, wie in Fig. 5(c) dargestellt. Schließlich können die Volumenhologrammstruktur 16 und Oberflächenhologrammstruktur 14 auch auf gegenüberliegenden Seiten des Trägers 60 angeordnet sein, wie in Fig. 5(d) illustriert, und dabei sowohl vollständig übereinander, teilweise überlappend oder nebeneinander angeordnet sein.

### Bezugszeichenliste

- 10: Banknote
- 12: Sicherheitselement
- 14: Oberflächenhologrammstruktur
- 15: Aussparungen
- 16: Volumenhologrammstruktur
- 18: Portrait
- 20: Photopolymerschicht
- 22, 24: Bereiche
- 26, 28: Bragg-Ebenen
- 30: Prägelackschicht
- 32: Beugungsstruktur
- 34: Metallschicht
- 36: Aussparung
- 40: Quellmittel
- 50: Sicherheitselement
- 52: Quellmittelschicht
- 54: Deckschicht
- 60: Träger
- 70: Mikrostruktur

## Patentansprüche

1. Sicherheitselement für Sicherheitspapiere, Wertdokumente und andere Datenträger, mit einer Oberflächenhologrammstruktur und einer Volumenhologrammstruktur, wobei die Volumenhologrammstruktur in Teilbereichen aufgequollen ist, **dadurch gekennzeichnet dass** die Volumenhologrammstruktur durch das Aufquellen in Teilbereichen eine Zusatzinformation in Form eines zwei- oder mehrfarbigen Motivs und in Form einer Mikrostruktur bildet, die eine dreidimensionale Zusatzinformation in der Volumenhologrammstruktur darstellt.

2. Sicherheitselement nach Anspruch 1, **dadurch gekennzeichnet, dass** die Mikrostruktur diffraktiv ausgebildet ist oder zur Erzielung optischer Effekte, insbesondere Vergrößerung, Verkleinerung oder Verzerrung, ausgebildet ist.

3. Sicherheitselement nach Anspruch 1 oder 2, **dadurch gekennzeichnet, dass** die Mikrostruktur in Form einer Binärstruktur oder einer linsenartigen Struktur ausgebildet ist.

4. Sicherheitselement nach wenigstens einem der Ansprüche 1 bis 3, **dadurch gekennzeichnet, dass** das zwei- oder mehrfarbigen Motivs und/oder die Mikrostruktur eine Zusatzinformation in Form eines Halbtonbildes bilden.

5. Sicherheitselement nach wenigstens einem der Ansprüche 1 bis 4, **dadurch gekennzeichnet, dass** entweder die Oberflächenhologrammstruktur in einer Prägelackschicht vorliegt, die zusammen mit einer Metallschicht eine Reflexionshologrammstruktur bildet, wobei die Metallschicht der Reflexionshologrammstruktur mit Aussparungen in Form von Mustern, Zeichen oder einer Codierung versehen ist, oder die Oberflächenhologrammstruktur in einer Prägelackschicht vorliegt, die zusammen mit einer transparenten Deckschicht mit unterschiedlichem Brechungsindex ein Transmissionshologramm bildet.

6. Sicherheitselement nach Anspruch 5, **dadurch gekennzeichnet, dass** die Prägelackschicht der Oberflächenhologrammstruktur zugleich ein Quellmittel für das bereichsweise Aufquellen der Volumenhologrammstruktur bildet.

7. Verfahren zur Herstellung eines Sicherheitselements nach wenigstens einem der Ansprüche 1 bis 6, bei dem
- zur Erzeugung einer Volumenhologrammstruktur eine Photopolymerschicht belichtet und fixiert wird,
- ein Quellmittel auf die Volumenhologrammstruktur aufgebracht wird, das zur Erzeugung einer oder mehrerer gewünschter Farben für eine definierte Einwirkzeit auf die Photopolymerschicht einwirken gelassen wird, wodurch in der Volumenhologrammstruktur eine Zusatzinformation in Form eines zwei- oder mehrfarbigen Motivs und in Form einer Mikrostruktur gebildet wird, die eine dreidimensionale Zusatzinformation in der Volumenhologrammstruktur darstellt, und
- die Volumenhologrammstruktur mit einer Oberflächenhologrammstruktur kombiniert wird.

8. Verfahren nach Anspruch 7, **dadurch gekennzeichnet, dass** die Volumenhologrammstruktur vor dem Erzeugen der Zusatzinformation definiert, bevorzugt diffus belichtet wird, insbesondere über eine Mattscheibe.

9. Verfahren nach Anspruch 7 oder 8, **dadurch gekennzeichnet, dass** das Quellmittel durch ein Tintenstrahldruckverfahren aufgebracht wird.

10. Verfahren nach wenigstens einem der Ansprüche 7 bis 9, **dadurch gekennzeichnet, dass** das Quellmittel nach Ablauf der definierten Einwirkzeit entfernt wird.

11. Verfahren nach wenigstens einem der Ansprüche 7 bis 9, **dadurch gekennzeichnet, dass** die definierte Einwirkzeit des Quellmittels durch Bestrahlen mit UV-Strahlung beendet wird.

12. Verfahren nach Anspruch 11, **dadurch gekennzeichnet, dass** das Quellmittel selektiv mit UV-Strahlung in Gestalt des zu erzeugenden Motivs belichtet wird.

13. Verfahren nach wenigstens einem der Ansprüche 7 bis 12, **dadurch gekennzeichnet, dass** zur Erzeugung der Oberflächenhologrammstruktur eine Prägelackschicht auf die Volumenhologrammstruktur aufgebracht wird und eine gewünschte Beugungsstruktur in die Prägelackschicht eingeprägt wird.

14. Verfahren nach Anspruch 13, **dadurch gekennzeichnet, dass** das Quellmittel zugleich die Prägelackschicht bildet, in die die gewünschte Beugungsstruktur eingeprägt wird.

15. Datenträger, insbesondere Sicherheitspapier oder Wertdokument mit einem Sicherheitselement nach einem der Ansprüche 1 bis 6 oder mit einem nach einem der Ansprüche 7 bis 14 hergestellten Sicherheitselement.

## Claims

1. A security element for security papers, value documents and other data carriers, having a surface hologram structure and a volume hologram structure, the volume hologram structure being swollen in fractional regions, **characterized in that,** due to the swelling in fractional regions, the volume hologram structure forms an additional piece of information in the form of a two- or multi-colored motif and in the form of a microstructure that constitutes a three-dimensional additional piece of information in the volume hologram structure.

2. The security element according to claim 1, **characterized in that** the microstructure is developed to be diffractive or is developed to achieve optical effects, especially magnification, reduction or distortion.

3. The security element according to claim 1 or 2, **characterized in that** the microstructure is developed in the form of a binary structure or a lenslike structure.

4. The security element according to at least one of claims 1 to 3, **characterized in that** the two- or multi-colored motif and/ or the microstructure form an additional piece of information in the form of a halftone image.

5. The security element according to at least one of claims 1 to 4, **characterized in that** either the surface hologram structure is present in an embossing lacquer layer that, together with a metal layer, forms a reflection hologram structure, the metal layer of the reflection hologram structure being provided with gaps in the form of structures, characters or a code, or the surface hologram structure being present in an embossing lacquer layer that, together with a transparent cover layer having a different refraction index, forms a transmission hologram.

6. The security element according to claim 5, **characterized in that** the embossing lacquer layer of the surface hologram structure simultaneously forms a swelling agent for the swelling of the volume hologram structure in some regions.

7. A method for manufacturing a security element according to at least one of claims 1 to 6, in which
- to produce a volume hologram structure, a photopolymer layer is exposed and fixed,
- to the volume hologram structure is applied a swelling agent that, to produce one or more desired colors, is left on the photopolymer layer for a defined application time, through which is formed in the volume hologram structure an additional piece of information in the form of a two- or multi-colored motif and in the form of a microstructure, which additional piece of information constitutes a three-dimensional additional piece of information in the volume hologram structure, and
- the volume hologram structure is combined with a surface hologram structure.

8. The method according to claim 7, **characterized in that** the volume hologram structure is defined prior to the production of the additional piece of information, preferably is diffusely exposed, especially through a groundglass screen.

9. The method according to claim 7 or 8, **characterized in that** the swelling agent is applied through an inkjet printing method.

10. The method according to at least one of claims 7 to 9, **characterized in that** the swelling agent is removed after the defined application time has lapsed.

11. The method according to at least one of claims 7 to 9, **characterized in that** the defined application time of the swelling agent is terminated by irradiation with UV radiation.

12. The method according to claim 11, **characterized in that** the swelling agent is selectively exposed with UV radiation in the shape of the motif to be produced.

13. The method according to at least one of claims 7 to 12, **characterized in that,** to produce the surface hologram structure, an embossing lacquer layer is applied to the volume hologram structure and a desired diffraction structure is embossed in the embossing lacquer layer.

14. The method according to claim 13, **characterized in that** the swelling agent simultaneously forms the embossing lacquer layer in which the desired diffraction structure is embossed.

15. A data carrier, especially a security paper or value document having a security element according to one of claims 1 to 6 or having a security element manufactured according to one of claims 7 to 14.

## Revendications

1. Elément de sécurité pour papiers de sécurité, documents de valeur et autres supports de données, avec une structure d'hologramme superficielle et une structure d'hologramme volumique, la structure d'hologramme volumique étant gonflée dans des zones partielles,
**caractérisé en ce que** la structure d'hologramme volumique forme, grâce au gonflement dans des zones partielles, une information complémentaire sous la forme d'un motif bicolore ou multicolore et sous la forme d'une microstructure, laquelle représente une information complémentaire en trois dimensions dans la structure d'hologramme volumique.

2. Elément de sécurité selon la revendication 1, **caractérisé en ce que** la microstructure est réalisée de manière diffractive ou bien est réalisée pour l'obtention d'effets optiques, en particulier un agrandissement, une réduction ou une distorsion.

3. Elément de sécurité selon la revendication 1 ou 2, **caractérisé en ce que** la microstructure est réalisée sous la forme d'une structure binaire ou d'une structure semblable à une lentille.

4. Elément de sécurité selon l'une au moins des revendications 1 à 3, **caractérisé en ce que** le motif bicolore ou multicolore et/ou la microstructure forment une information complémentaire sous la forme d'une image en demi-teintes.

5. Elément de sécurité selon l'une au moins des revendications 1 à 4, **caractérisé en ce que**, soit la structure d'hologramme superficielle est présente dans une couche de laque de gaufrage, laquelle forme, ensemble avec une couche métallique, une structure d'hologramme de réflexion, la couche métallique de la structure d'hologramme de réflexion étant munie d'évidements sous la forme de motifs, signes ou d'un codage, soit la structure d'hologramme superficielle est présente dans une couche de laque de gaufrage, laquelle forme un hologramme de transmission, ensemble avec une couche de couverture transparente avec un indice de réfraction différent.

6. Elément de sécurité selon la revendication 5, **caractérisé en ce que** la couche de laque de gaufrage de la structure d'hologramme superficielle forme simultanément un agent gonflant pour le gonflement par endroits de la structure d'hologramme volumique.

7. Procédé pour la fabrication d'un élément de sécurité selon l'une au moins des revendications 1 à 6, dans lequel
- pour la production d'une structure d'hologramme volumique, une couche de photopolymère est exposée à la lumière et fixée,
- un agent gonflant étant appliqué sur la structure d'hologramme volumique, que l'on laisse agir pendant une durée d'action définie sur la couche de photopolymère pour la production d'une ou plusieurs couleurs souhaitées, moyennant quoi, dans la structure d'hologramme volumique, une information complémentaire sous la forme d'un motif bicolore ou multicolore et sous la forme d'une microstructure est formée, laquelle représente une information complémentaire en trois dimensions dans la structure d'hologramme volumique, et
- la structure d'hologramme volumique étant combinée avec une structure d'hologramme superficielle.

8. Procédé selon la revendication 7, **caractérisé en ce que**, avant la production de l'information complémentaire, la structure d'hologramme volumique est exposée de manière définie à la lumière, de préférence de manière diffuse, en particulier via un écran dépoli.

9. Procédé selon la revendication 7 ou 8, **caractérisé en ce que** l'agent gonflant est appliqué grâce à un procédé d'impression à jet d'encre.

10. Procédé selon l'une au moins des revendications 7 à 9, **caractérisé en ce que** l'agent gonflant est éliminé une fois la durée d'action définie écoulée.

11. Procédé selon l'une au moins des revendications 7 à 9, **caractérisé en ce que** la durée d'action définie de l'agent gonflant est achevée par irradiation avec un rayonnement UV.

12. Procédé selon la revendication 11, **caractérisé en ce que** l'agent gonflant est exposé de manière sélective avec un rayonnement UV sous la forme du motif à produire.

13. Procédé selon l'une au moins des revendications 7 à 12, **caractérisé en ce que**, pour la production de la structure d'hologramme superficielle, on applique une couche de laque de gaufrage sur la structure d'hologramme volumique, et une structure de diffraction souhaitée étant gaufrée dans la couche de laque de gaufrage.

14. Procédé selon la revendication 13, **caractérisé en ce que** l'agent gonflant forme simultanément la couche de laque de gaufrage dans laquelle la structure de diffraction souhaitée est gaufrée.

15. Support de données, en particulier papier de sécurité ou document de valeur avec un élément de sécurité selon l'une des revendications 1 à 6 ou avec un élément de sécurité fabriqué selon l'une des revendications 7 à 14.
